# FASCICULE DE BREVET EUROPEEN

(11) **EP 3 560 350 B1**
(45) Date de publication et mention de la délivrance du brevet: **11.11.2020**
(21) Numéro de dépôt: 19171203.3
(22) Date de dépôt: 25.04.2019
(51) Int. Cl.: A23L 17/00, A23P 20/20

(54) **PROCÉDÉ DE FABRICATION D'UN PRODUIT ALIMENTAIRE À BASE DE PÂTE ALIMENTAIRE SE PRÉSENTANT SOUS LA FORME D'UN BÂTONNET, PRODUIT ET CHAÎNE DE FABRICATION CORRESPONDANTS**
VERFAHREN ZUR HERSTELLUNG EINES LEBENSMITTEL-PRODUKTES AUF BASIS EINES LEBENSMITTEL-TEIGES IN STAEBCHEN-FORM, ENTSPRECHENDES PRODUKT UND PRODUKTIONSLINIE
PROCESS FOR PREPARATION OF A FOOD PRODUCT BASED ON FOOD DOUGH IN THE FORM OF A ROD, CORRESPONDING PRODUCT AND MANUFACTURING CHAIN

(30) Priorité: 25.04.2018 FR 1853613
(43) Date de publication de la demande: 30.10.2019
(73) Titulaire: Fleury Michon, 85700 Pouzauges (FR)
(72) Inventeur: GOURAUD, Bruno, 85500 Mesnard la Barotière (FR); GODET, Jean-Pierre, 85390 Chavagne les Redoux (FR); PROUX, Manuel, 85210 La Reorthe (FR)
(74) Mandataire: Vidon Brevets & Stratégie

(56) Documents cités:
- EP-A1- 0 575 233
- EP-A1- 1 958 512
- EP-A1- 3 213 644
- EP-A2- 0 132 363
- FR-A1- 2 914 151
- FR-A1- 2 914 539
- JP-A- S62 259 565
- US-A- 5 514 397

## Description

### 1. Domaine de l'invention

Le domaine de l'invention est celui de l'agroalimentaire.

L'invention concerne plus particulièrement la fabrication industrielle de produits frais ou surgelés à base de pâte alimentaire, et notamment mais non exclusivement de surimi, pouvant être consommés directement par le consommateur.

### 2. Art antérieur

Parmi les produits frais qui peuvent être consommés directement par le consommateur, sans préparation, on connaît depuis longtemps les bâtonnets de surimi.

Le procédé de fabrication de ces bâtonnets de surimi est bien connu de l'homme du métier. Il consiste d'abord à préparer une pâte comportant notamment de la chair de poisson, et de l'eau, puis à étaler cette pâte sous la forme d'une bande d'environ 1 à 2 mm d'épaisseur et d'une largeur d'environ 13 cm.

Cette bande est précuite, puis enroulée pour former un rouleau de surimi qui est par la suite découpé en bâtonnets.

Ces bâtonnets sont pasteurisés lors d'une cuisson complémentaire.

Les documents JPS62259565 et EP0575233 décrivent des procédés de fabrication de tels bâtonnets.

Les bâtonnets de surimi classiques sont relativement neutres en goût.

Il a donc été proposé de mélanger la préparation de surimi base à des arômes qui sont choisis en fonction du goût que l'on souhaite donner au produit. On peut, par exemple, ajouter des arômes de crabe ou de langouste. Le produit est ensuite travaillé et mis en forme, par exemple, sous une forme de bâtonnet, de rondelle ou de médaillon.

Aucun produit à base de surimi dont la texture en bouche et l'aspect se rapprochent sensiblement de la vraie chair de pince de crabe n'a été commercialisé à ce jour.

De façon plus générale, il existe un besoin d'amélioration de l'offre des produits vendus dans le commerce, notamment sous la forme de bâtonnets, afin de proposer au consommateur une offre plus variée et plus diversifiée.

### 3. Exposé de l'invention

L'invention répond à ce besoin en proposant un procédé de fabrication d'un produit alimentaire se présentant sous la forme d'un bâtonnet, ledit procédé comprenant les étapes suivantes :
- obtention d'au moins trois bandes de pâte alimentaire,
- scarification de la première bande de pâte alimentaire et de la deuxième bande de pâte alimentaire,
- enroulement de ladite première bande scarifiée sur elle-même dans le sens de sa largeur,
- enroulement de ladite deuxième bande de pâte alimentaire scarifiée autour de ladite première bande enroulée sur elle-même,
- enroulement de la troisième bande de pâte alimentaire non scarifiée, formant enveloppe, autour des deux bandes enroulées afin de former un rouleau,
- découpe du rouleau pour former des bâtonnets.

L'invention propose ainsi un procédé de fabrication d'un produit alimentaire à base de pâte alimentaire obtenu, à partir d'au moins deux bandes de pâte alimentaire scarifiées et enroulée l'une autour de l'autre et autour desquelles on vient enrouler une troisième bande non scarifiée formant enveloppe ou gaine.

Le produit obtenu se présente sous la forme d'un bâtonnet ultra-fibré.

Lorsque la pâte alimentaire est une pâte de surimi, la texture en bouche et l'aspect du produit se rapprochent sensiblement de la vraie chair de pince de crabe.

La pâte alimentaire peut, dans des modes de réalisation particuliers, être une pâte de poisson (on obtient alors un produit se rapprochant d'un produit de la mer), une pâte de poulet ou une pâte de protéines végétales, par exemple.

Il peut être envisagé d'utiliser plus de deux bandes scarifiées (trois ou quatre, par exemple) enroulées l'une autour de l'autre et autour desquelles on vient enrouler une autre bande non scarifiée formant enveloppe.

Selon une mise en œuvre particulière de l'invention, lesdites au moins deux bandes sont obtenues partir d'une prémêlée, ou pâte de surimi.

Selon un aspect particulier de l'invention, le procédé comprend, avant l'étape de découpe du rouleau, une étape d'aplatissement partiel du rouleau.

Cet écrasement partiel vient donner la forme définitive du bâtonnet et vient "fibrer" le produit, ce qui lui donne la texture en bouche recherchée.

Selon un aspect particulier de l'invention, le procédé comprend, avant l'enroulement de la bande formant enveloppe, la colorisation de tout ou partie de la surface extérieure de cette dernière.

Par exemple, la troisième bande de surimi enroulée autour des deux premières et formant l'enveloppe du bâtonnet obtenu est colorisée en rouge (ou une autre couleur) de sorte à donner l'aspect d'une pince de crabe, d'un dos de crevette ou d'un morceau de saumon au produit découpé.

Selon un aspect particulier de l'invention, l'épaisseur et la largeur de la bande formant enveloppe sont inférieures à celles de chacune desdites au moins deux autres bandes scarifiées de pâte alimentaire.

Par exemple, la troisième bande de surimi formant enveloppe est plus fine que les deux autres contribuant à la sensation ultra-texturée en bouche et donnant encore davantage l'aspect d'une pince de crabe au produit découpé lorsque la pâte alimentaire est une pâte de surimi.

Selon un aspect particulier de l'invention, le procédé comprend une étape de refroidissement après l'aplatissement et avant la découpe du rouleau.

Selon un aspect particulier de l'invention, la découpe du rouleau est effectuée selon un angle par rapport à la direction longitudinale dudit rouleau.

Les moyens de découpe permettent la découpe successive de biais de bâtonnets se présentant sous une forme effilée de fuseau.

Les extrémités des bâtonnets obtenus s'étendent de façon oblique par rapport à l'axe longitudinal du bâtonnet.

Ce procédé de fabrication facile de bâtonnets, de surimi notamment, permet d'offrir de nouveaux goûts, plus variés, et une nouvelle expérience sensorielle au consommateur par la texture et l'esthétisme du bâtonnet.

Le produit obtenu présente l'aspect et la couleur naturelle attendue et recherchée par le consommateur.

Selon un aspect particulier de l'invention, la scarification sur la largeur desdites au moins deux bandes scarifiées est interrompue à intervalles réguliers lors du défilement desdites au moins deux bandes.

Ainsi, la scarification n'est pas appliquée sur toute la longueur des bandes, mais est interrompue brièvement de façon régulière.

On obtient ainsi des points d'attache qui sont obtenus sur la largeur des bandes scarifiées.

Cette approche est mise en œuvre de façon à ne pas provoquer de délitement des bandes, les fibres obtenues devant se tenir et être liées.

On crée ainsi une juxtaposition de fibres tubulaires qui ne sont pas scindées (on évite ainsi le délitement des bandes scarifiées).

Une fois enroulée et découpée, on obtient un amas de fibres disposées dans une enveloppe non scarifiée (cette dernière est typique de la pince de crabe lorsqu'elle est constituée de pâte de surimi).

Le produit, lorsqu'il est constitué de pâte de surimi, présente une texture fibrée en bouche, typique de la pince de crabe. L'aspect ultra-fibré du bâtonnet obtenu est ainsi proche du produit naturel.

L'invention porte également sur un produit alimentaire à base de pâte alimentaire se présentant sous la forme d'un bâtonnet, obtenu par le procédé décrit ci-dessus.

Selon un aspect particulier de l'invention, un tel bâtonnet présente une longueur comprise entre 85 et 90 mm, une largeur comprise entre 10 et 15 mm et une hauteur comprise entre 15 et 20 mm.

Dans des variantes, ces dimensions pourraient être différentes de sorte à obtenir des bâtonnets de taille réduite (mini-bâtonnets ou des bouchées).

Selon une mise en œuvre particulière de l'invention, le bâtonnet est un bâtonnet de surimi.

L'invention porte également sur une chaîne de fabrication de produits alimentaires se présentant sous la forme de bâtonnets comprenant :
- des moyens d'obtention d'au moins trois bandes de pâte alimentaire,
- des moyens de scarification de deux desdites bandes de pâte alimentaire,
- des moyens d'enroulement d'une première bande scarifiée de pâte alimentaire sur elle-même dans le sens de sa largeur, puis d'une deuxième bande scarifiée de pâte alimentaire autour de la première bande de pâte alimentaire enroulée sur elle-même, puis de la troisième bande de pâte alimentaire non scarifiée, formant enveloppe, autour desdites bandes enroulées afin de former un rouleau,
- des moyens de découpe du rouleau pour former des bâtonnets.

Selon un aspect particulier de l'invention, la chaîne de fabrication comprend :
- des moyens d'obtention de trois bandes de pâte alimentaire,
- des moyens de scarification de la première bande de pâte alimentaire et de la deuxième bande de pâte alimentaire,
- des moyens d'enroulement de la première bande de pâte alimentaire scarifiée sur elle-même dans le sens de sa largeur, de ladite deuxième bande de pâte alimentaire scarifiée autour de la première bande de pâte alimentaire enroulée sur elle-même, et d'enroulement (S8) de la troisième bande de pâte alimentaire non scarifiée, formant enveloppe, autour de des deux bandes enroulées afin de former un rouleau,
- des moyens de découpe du rouleau pour former des bâtonnets.

Selon un aspect particulier de l'invention, la chaîne de fabrication comprend des moyens d'aplatissement partiel du rouleau, disposé avant les moyens de découpe.

Selon un aspect particulier de l'invention, la chaîne de fabrication comprend des moyens de colorisation de tout ou partie de la surface extérieure de la bande formant enveloppe disposés avant les moyens d'enroulement de celle-ci.

Ces moyens de colorisation pourraient toutefois être disposés après les moyens d'enroulement.

### 4. Liste des figures

D'autres caractéristiques et avantages de l'invention apparaîtront plus clairement à la lecture de la description suivante de plusieurs modes de réalisation, donnés à titre de simples exemples illustratifs et non limitatifs, et des dessins annexés, parmi lesquels :
- la figure 1 est un schéma bloc illustrant les principales étapes du procédé de fabrication selon l'invention ;
- la figure 2 est une vue schématique de la chaîne de fabrication montrant trois bandes extrudées de pâte de surimi disposées en parallèle et la façon dont elles sont enroulées les unes autour des autres ;
- la figure 3 est une vue schématique, en perspective, d'un bâtonnet de surimi obtenu par le procédé de l'invention.

### 5. Description détaillée de l'invention

### 5.1 Rappel du principe de l'invention

Le principe de l'invention consiste à fabriquer un produit alimentaire à base de pâte alimentaire.

Ce produit alimentaire est vendu prêt à être consommé, notamment en apéritif ou en entrée, de façon à ce que le consommateur n'ait aucune étape de préparation à effectuer.

La description qui suit donne un exemple d'un tel produit alimentaire, en l'occurrence un produit alimentaire à base de surimi se présentant sous la forme d'un bâtonnet et imitant la chair de pince de crabe naturelle ou un autre produit de la mer.

### 5.2 Fabrication du produit

Les bâtonnets de surimi sont fabriqués à partir d'une pâte, ou prémêlée, qui est constituée, par exemple :
- de chair de poisson broyée,
- d'eau,
- de fécule alimentaire et d'amidon de blé pour la texture,
- de sel,
- de lait écrémé en poudre ou du blanc d'œuf éventuellement,
- d'huile de colza non hydrogéné pour le moelleux, et
- éventuellement d'un ou de plusieurs arômes ou préparations aromatiques ainsi qu'un colorant et/ou des ingrédients colorants.

Cette composition particulière permet une plus grande solidité et élasticité de la pâte de départ (appelée également « prémêlée »).

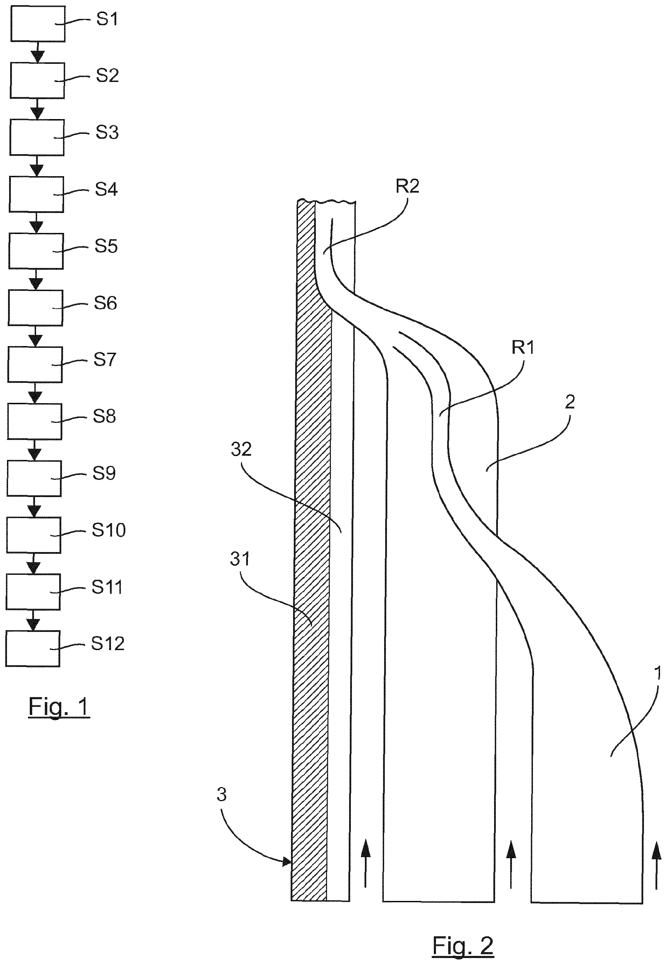

Dans un mode de réalisation particulier, illustré sur la figure 2, le produit est obtenu par l'enroulement de trois bandes de surimi les unes autour des autres.

La fabrication de chacune des trois bandes de surimi peut être identique à celle d'une bande utilisée pour faire des bâtonnets de surimi classiques.

Le procédé de fabrication de ces bandes est bien connu de l'homme du métier.

Il consiste principalement à extruder et étaler de façon continue de la pâte de surimi sur un tambour ou plaque de pré-cuisson (étape S1), de façon à produire une première et une deuxième bandes d'environ 1 à 2,5 mm d'épaisseur et d'une largeur comprise entre 150 et 170 mm, et une troisième bande d'environ 1 à 2 mm d'épaisseur et d'une largeur comprise entre 110 et 120 mm.

L'extrudeuse mise en œuvre sur la chaîne de fabrication est une extrudeuse classique adaptée pour pouvoir extruder trois bandes présentant de telles largeurs.

Ces trois bandes référencées 1 à 3 sont disposées côte à côte de façon espacée et parallèle comme illustré sur la figure 2 (les flèches illustrent le sens d'avancement des bandes) et reposent sur un convoyeur.

Chacune des trois bandes 1 à 3, une fois précuite par un dispositif de pré-cuisson (étape S2), est refroidie (étape S3) par un dispositif de refroidissement.

Les trois bandes défilent à la même vitesse pendant la pré-cuisson, et lorsqu'elles sont refroidies.

Les première et deuxième bandes 1 et 2 sont scarifiées (étape S4) par des moyens de scarification avant d'être enroulées (étapes S5 et S6).

Plus précisément, la première bande 1 scarifiée s'enroule sur elle-même dans le sens de sa largeur, et forme alors un rouleau R1 de premier diamètre (étape S5). Puis, la deuxième bande 2 scarifiée est enroulée autour de la première bande 1 enroulée (étape S6) formant ainsi un rouleau R2 de deuxième diamètre supérieur au premier diamètre (la première bande 1 enroulée est donc disposée dans la deuxième bande 2).

La troisième bande 3 non scarifiée est enroulée autour du rouleau R2 obtenu (étape S8) et forme une enveloppe ou membrane (elle fait un tour et demi autour du rouleau de deuxième diamètre, par exemple), qui ressemble de manière proche à la membrane recouvrant la chair des pattes réelles de crabe.

On obtient ainsi un cylindre présentant un diamètre de 30 mm.

Avant son enroulement, on colore en rouge la troisième bande 3 (étape S7) par le biais de moyens d'application d'un colorant de sorte à obtenir un effet nuancé sur le dessus (ou face extérieure, la face intérieure reposant sur le convoyeur).

Cette colorisation est localisée sur une étendue de largeur réduite par rapport à la largeur de la troisième bande 3 de telle sorte que l'effet nuancé recouvre la périphérie du bâtonnet dans sa totalité une fois ce dernier découpé. Une portion 31 de la troisième bande 3 est donc colorée en rouge, mais l'autre portion 32 située du côté de la deuxième bande 2 ne l'est pas.

Dans une variante de mise en œuvre, la totalité de la largeur de la troisième bande 3 est colorisée.

La première bande 1 de surimi scarifiée acheminée sur le tapis est enroulée en continu sur elle-même grâce à un système d'enroulement prenant la forme d'une languette. Ce système est bien connu de l'homme du métier. Elle forme alors un rouleau de premier diamètre.

Le rouleau ainsi obtenu est décalé par un cylindre vertical vers la deuxième bande 2 de surimi, qui s'enroule grâce à une languette d'enroulement autour dudit rouleau de sorte à former un rouleau de deuxième diamètre plus important.

Le rouleau ainsi obtenu est décalé par un cylindre vertical vers la troisième bande 3 de surimi, qui s'enroule grâce à une languette d'enroulement autour du rouleau de deuxième diamètre.

Comme souligné précédemment, la largeur et l'épaisseur de la troisième bande 3 est moindre par rapport aux deux autres bandes 1, 2.

On aplatit ensuite d'environ un tiers le rouleau final en utilisant un tapis (étape S9).

Cet écrasement du rouleau final vient fibrer les deux premières bandes 1, 2 enroulées et permet de donner la forme finale, ovalisée, du produit.

Une fois l'étape S9 achevée, il est possible de mettre en œuvre une étape de refroidissement (étape S10).

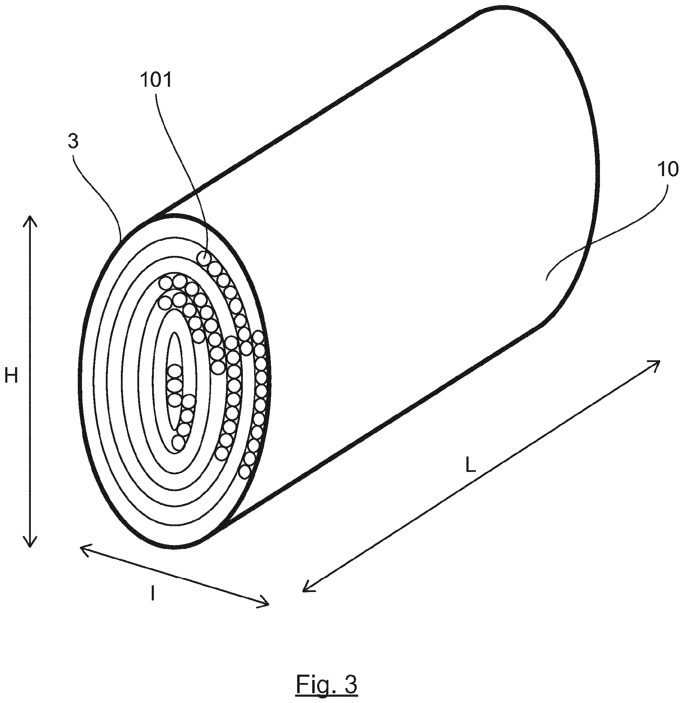

On coupe (étape S11) ensuite le rouleau final qui défile, de biais (en oblique) par rapport à l'axe longitudinal du rouleau, à 60° par exemple à l'aide de moyens de découpe, tels une guillotine, afin former des bâtonnets 10 de surimi dont les extrémités sont en biais (figure 3).

Comme illustré schématiquement sur la figure 3, la visibilité des fibres 101 juxtaposées constituant le produit est ainsi augmentée.

En alternative, les moyens de découpe peuvent couper le rouleau final à angle droit (90°).

Les bâtonnets 10 découpés sont placés en barquette dans laquelle ils sont pasteurisés (étape S12).

Après pasteurisation (rétreint), les bâtonnets présentent, par exemple, une longueur L de 87 mm, une largeur I de 13 mm et une hauteur H de 18-19 mm.

Les bâtonnets 10 ainsi conditionnés constituent un produit frais prêt à être vendu.

Grâce à ce procédé de fabrication dont les étapes principales sont représentées de façon schématique sur la figure 1, on obtient un produit alimentaire à base de surimi se présentant sous la forme d'un bâtonnet qui présente de nombreuses fibres, et dont l'aspect et la texture sont proches du produit naturel.

L'aspect du produit et la sensation qu'il donne dans la bouche sont très proches de ceux de la chair de crabe.

Il est essentiel que le bâtonnet de l'invention présente des propriétés mécaniques satisfaisantes lui permettant d'être saisi par le consommateur sans se déliter et une texture ultra-fibrée typique de la pince de crabe.

Les première et deuxième bandes de surimi sont chacune scarifiées par un passage entre deux rouleaux scarificateurs, les dents des rouleaux de scarification pénétrant dans la bande de surimi de façon profonde.

Ces dents permettent la scarification des bandes 1, 2 de surimi sur leurs deux faces. La profondeur de pénétration des dents de scarification est comprise entre 0.5 et 1 mm (+/- 0,1 mm).

Avantageusement, la scarification sur la largeur de chacune des première et deuxième bandes 1, 2 est interrompue à intervalles réguliers lors du défilement desdites bandes 1, 2.

La scarification est appliquée sur toute la longueur des première et deuxième bandes 1, 2, sauf en des points, dits points d'attache, espacés à intervalles réguliers.

Ces points d'attache de 2mm de long, par exemple, sont obtenus sur la largeur de chacune des première et deuxième bandes 1, 2, et sont espacés de 4 cm, par exemple, dans le sens de la longueur des bandes 1, 2.

Ceci permet d'éviter le délitement des première et deuxième bandes 1, 2en sortie du scarificateur et le délitement du bâtonnet 10 lors de la coupe.

Une fois les première et deuxième bandes 1, 2 enroulées et découpées, on obtient un amas de fibres disposé dans une enveloppe (constituée par la troisième bande 3) typique de la pince de crabe.

Cette enveloppe assure une meilleure tenue mécanique des bâtonnets 10 de surimi qui ne se délitent pas en brins.

Le produit présente une texture fibrée en bouche, typique de la pince de crabe.

### 5.3 Variantes de réalisation

Dans d'autres variantes de réalisation, le produit est obtenu par l'enroulement de quatre bandes ou plus de surimi les unes autour des autres.

Dans le cas où le produit est obtenu par l'enroulement de quatre bandes de surimi les unes autour des autres, les trois premières bandes sont scarifiées par des moyens de scarification. La première bande de surimi scarifiée acheminée sur le tapis est enroulée en continu sur elle-même. La deuxième bande scarifiée est enroulée autour de la première bande enroulée sur elle-même, puis on vient enrouler la troisième bande scarifiée autour des deux premières bandes de sorte à obtenir un rouleau. La quatrième bande non scarifiée est enroulée autour du rouleau obtenu et forme une enveloppe ou membrane, qui ressemble de manière proche à la membrane recouvrant la chair des pattes réelles de crabe.

La première bande de surimi scarifiée acheminée sur le tapis est enroulée en continu sur elle-même grâce à un système d'enroulement prenant la forme d'une languette. Ce système est bien connu de l'homme du métier. Elle forme alors un premier rouleau de premier diamètre.

Le premier rouleau ainsi obtenu est décalé par un cylindre vertical vers la deuxième bande de surimi, qui s'enroule grâce à une languette d'enroulement autour dudit premier rouleau de sorte à former un deuxième rouleau de deuxième diamètre plus important.

Le deuxième rouleau ainsi obtenu est décalé par un cylindre vertical vers la troisième bande de surimi, qui s'enroule grâce à une languette d'enroulement autour du deuxième rouleau de sorte à former un troisième rouleau de troisième diamètre plus important.

Le troisième rouleau ainsi obtenu est décalé par un cylindre vertical vers une quatrième bande de surimi, non scarifiée, qui s'enroule grâce à une languette d'enroulement autour dudit troisième rouleau de sorte à former un quatrième rouleau de diamètre plus important.

La largeur et l'épaisseur de la quatrième bande sont moindres par rapport aux trois premières bandes.

On aplatit ensuite d'environ un tiers le rouleau final en utilisant un tapis.

Cet écrasement du rouleau final vient fibrer la première bande enroulée sur elle-même et permet de donner la forme finale, ovalisée, du produit.

Une fois cette étape achevée, il est possible de mettre en œuvre une étape de refroidissement.

On coupe ensuite le rouleau final qui défile, de biais (en oblique) par rapport à l'axe longitudinal du rouleau, à 60° par exemple à l'aide de moyens de découpe, tels une guillotine, afin former des bâtonnets 10 de surimi dont les extrémités sont en biais.

En alternative, les moyens de découpe peuvent couper le rouleau final à angle droit (90°).

Les bâtonnets découpés sont placés en barquette dans laquelle ils sont pasteurisés.

### 5.4 Autres aspects

Il est à noter que d'autres couleurs peuvent être déposées sur la surface extérieure de la bande destinée à former l'enveloppe du produit.

Par ailleurs, des arômes différents peuvent être incorporés dans la pâte alimentaire (arômes de crabe ou de langouste, saumon, crevette ou soja/gingembre, par exemple).

Un fourrage peut être incorporé dans le bâtonnet obtenu. Un tel fourrage peut être déposé sous l'enveloppe non scarifiée ou au cœur de la première bande scarifiée.

Une garniture ("topping" en anglais) peut être ajoutée avant ou après la découpe du rouleau en bâtonnets.

La pâte alimentaire peut, dans des modes de réalisation particuliers, être une pâte de poisson (on obtient alors un produit se rapprochant d'un produit de la mer), une pâte de poulet ou une pâte de protéines végétales, par exemple.

## Revendications

1. Procédé de fabrication d'un produit alimentaire se présentant sous la forme d'un bâtonnet (10), ledit procédé comprenant les étapes suivantes :
- obtention (S1, S2, S3) d'au moins trois bandes (1, 2, 3) de pâte alimentaire,
- scarification (S4) de la première bande (1) de pâte alimentaire et de la deuxième bande (2) de pâte alimentaire,
- enroulement (S5) de ladite première bande (1) de pâte alimentaire scarifiée sur elle-même dans le sens de sa largeur,
- enroulement (S6) de ladite deuxième bande (2) de pâte alimentaire scarifiée autour de la première bande (1) de pâte alimentaire enroulée sur elle-même,
- enroulement (S8) de la troisième bande (3) de pâte alimentaire non scarifiée, formant enveloppe, autour des deux bandes (1, 2) enroulées afin de former un rouleau,
- découpe (S11) du rouleau pour former des bâtonnets (10).

2. Procédé de fabrication selon la revendication 1, **caractérisé en ce que** lesdites au moins trois bandes (1, 2, 3) sont obtenues à partir d'une prémêlée, ou pâte de surimi.

3. Procédé selon la revendication 1 ou 2, **caractérisé en ce qu'**il comprend, avant l'étape de découpe (S11) du rouleau, une étape d'aplatissement (S9) partiel du rouleau.

4. Procédé selon l'une des revendications 1 à 3, **caractérisé en ce qu'**il comprend, avant l'enroulement (S8) de la bande (3) formant enveloppe, la colorisation (S7) de tout ou partie de la surface extérieure de cette dernière.

5. Procédé selon l'une des revendications 1 à 4, **caractérisé en ce que** l'épaisseur et la largeur de la bande (3) non scarifiée formant enveloppe sont inférieures à celles de chacune desdites au moins deux autres bandes (1, 2) de pâte alimentaire scarifiées.

6. Procédé selon l'une des revendications 1 à 5, **caractérisé en ce qu'**il comprend une étape de refroidissement (S10) après l'aplatissement (S9) et avant la découpe (S11) du rouleau.

7. Procédé selon l'une des revendications 1 à 6, **caractérisé en ce que** la découpe (S11) du rouleau est effectuée selon un angle par rapport à la direction longitudinale dudit rouleau.

8. Procédé selon l'une des revendications 1 à 7, **caractérisé en ce que** la scarification (S4) sur la largeur desdites au moins deux bandes (1, 2) de pâte alimentaire scarifiées est interrompue à intervalles réguliers lors du défilement desdites au moins deux bandes (1, 2).

9. Produit alimentaire à base de pâte alimentaire se présentant sous la forme d'un bâtonnet (10) obtenu par le procédé selon l'une quelconque des revendications précédentes, comprenant :
- une première bande (1) de pâte alimentaire scarifiée et enroulée sur elle-même dans le sens de sa largeur;
- une deuxième bande (2) de pâte alimentaire scarifiée et enroulée autour de la première bande (1) de pâte alimentaire enroulée sur elle-même, et
- une troisième bande (3) de pâte alimentaire non scarifiée, formant enveloppe, enroulée autour de la deuxième bande (2) de pâte alimentaire elle-même enroulée autour de la première bande (1) de pâte alimentaire .

10. Produit alimentaire selon la revendication 9, **caractérisé en ce que** le bâtonnet (10) présente une longueur (L) comprise entre 85 et 90 mm, une largeur (I) comprise entre 10 et 15 mm et une hauteur (H) comprise entre 15 et 20 mm.

11. Produit alimentaire selon la revendication 9 ou 10, **caractérisé en ce que** le bâtonnet (10) est un bâtonnet de surimi.

12. Chaîne de fabrication de produits alimentaires se présentant sous la forme de bâtonnets (10), **caractérisée en ce qu'**elle comprend :
- des moyens d'obtention d'au moins trois bandes (1, 2, 3) de pâte alimentaire,
- des moyens de scarification de deux desdites bandes (1, 2, 3) de pâte alimentaire,
- des moyens d'enroulement d'une première bande (1) de pâte alimentaire scarifiée sur elle-même dans le sens de sa largeur, puis d'une deuxième bande (2) de pâte alimentaire scarifiée autour de la première bande (1) de pâte alimentaire enroulée sur elle-même, puis de la troisième bande (3) de pâte alimentaire non scarifiée, formant enveloppe, autour desdites bandes (1, 2) de pâte alimentaire enroulées afin de former un rouleau,
- des moyens de découpe du rouleau pour former des bâtonnets (10).

13. Chaîne de fabrication selon la revendication 12, **caractérisée** en ce en ce qu'elle comprend :
- des moyens d'obtention (S1, S2, S3) de trois bandes (1, 2, 3) de pâte alimentaire,
- des moyens de scarification (S4) de la première bande (1) de pâte alimentaire et de la deuxième bande (2) de pâte alimentaire,
- des moyens d'enroulement (S5) de la première bande (1) de pâte alimentaire scarifiée sur elle-même dans le sens de sa largeur, de ladite deuxième bande (2) de pâte alimentaire scarifiée autour de la première bande (1) de pâte alimentaire enroulée sur elle-même, et d'enroulement (S8) de la troisième bande (3) de pâte alimentaire non scarifiée, formant enveloppe, autour de des deux bandes (1, 2) de pâte alimentaire enroulées afin de former un rouleau,
- des moyens de découpe (S11) du rouleau pour former des bâtonnets (10).

14. Chaîne de fabrication selon la revendication 12 ou 13, **caractérisée en ce qu'**elle comprend des moyens d'aplatissement partiel du rouleau, disposé avant les moyens de découpe.

15. Chaîne de fabrication selon l'une des revendications 12 à 14, **caractérisée en ce qu'**elle comprend des moyens de colorisation de tout ou partie de la surface extérieure de la bande (3) formant enveloppe disposés avant les moyens d'enroulement de celle-ci.

## Patentansprüche

1. Verfahren zur Herstellung eines Lebensmittelprodukts in der Form eines Stäbchens (10), wobei das Verfahren die folgenden Schritte umfasst:
- Erhalten (S1, S2, S3) von mindestens drei Bahnen (1, 2, 3) eines Lebensmittelteigs,
- Einstechen (S4) der ersten Bahn (1) aus Lebensmittelteig und der zweiten Bahn (2) aus Lebensmittelteig,
- Einrollen (S5) der ersten eingestochenen Bahn (1) aus Lebensmittelteig in sich selbst in der Richtung ihrer Breite,
- Rollen (S6) der zweiten eingestochenen Bahn (2) aus Lebensmittelteig um die erste in sich selbst eingerollte Bahn (1) aus Lebensmittelteig,
- Rollen (S8) der dritten nicht eingestochenen Bahn (3) aus Lebensmittelteig um die beiden eingerollten Bahnen (1, 2), eine Hülle bildend, um eine Rolle zu bilden,
- Schneiden (S11) der Rolle, um Stäbchen (10) zu bilden.

2. Herstellungsverfahren nach Anspruch 1, **dadurch gekennzeichnet, dass** die genannten mindestens drei Bahnen (1, 2, 3) aus einer Vormischung, oder aus Surimimasse, erhalten werden.

3. Verfahren nach Anspruch 1 oder 2, **dadurch gekennzeichnet, dass** es, vor dem Schritt (S11) des Schneidens der Rolle, einen Schritt (S9) des teilweisen Abplattens der Rolle umfasst.

4. Verfahren nach einem der Ansprüche 1 bis 3, **dadurch gekennzeichnet, dass** es, vor dem Rollen (S8) der Bahn (3), welche die Hülle bildet, die teilweise oder vollständige Färbung (S7) der Außenfläche dieser Letzteren umfasst.

5. Verfahren nach einem der Ansprüche 1 bis 4, **dadurch gekennzeichnet, dass** die Dicke und die Breite der nicht eingestochenen Bahn (3), welche die Hülle bildet, kleiner sind als jene jeder der genannten mindestens zwei anderen eingestochenen Bahnen (1, 2) aus Lebensmittelteig.

6. Verfahren nach einem der Ansprüche 1 bis 5, **dadurch gekennzeichnet, dass** es einen Schritt des Kühlens (S10) nach dem Abplatten (S9) und vor dem Schneiden (S11) der Rolle umfasst.

7. Verfahren nach einem der Ansprüche 1 bis 6, **dadurch gekennzeichnet, dass** das Schneiden (S11) der Rolle unter einem Winkel relativ zu der Längsrichtung der genannten Rolle durchgeführt wird.

8. Verfahren nach einem der Ansprüche 1 bis 7, **dadurch gekennzeichnet, dass** das Einstechen (S4) über die Breite der genannten mindestens zwei eingestochenen Bahnen (1, 2) aus Lebensmittelteig in regelmäßigen Intervallen beim Transport der genannten mindestens zwei Bahnen (1, 2) unterbrochen wird.

9. Lebensmittelprodukt auf der Basis eines Lebensmittelteigs in der Form eines Stäbchens (10), der durch das Verfahren nach einem der vorhergehenden Ansprüche erhalten wird, umfassend:
- eine erste Bahn (1) aus Lebensmittelteig, die eingestochen und in der Richtung ihrer Breite in sich selbst eingerollt ist;
- eine zweite Bahn (2) aus Lebensmittelteig, die eingestochen und um die erste in sich selbst eingerollte Bahn (1) aus Lebensmittelteig gerollt ist; und
- eine dritte nicht eingestochene, eine Hülle bildende, um die zweite Bahn (2) aus Lebensmittelteig, welche ihrerseits um die erste Bahn (1) aus Lebensmittelteig gerollt ist, gerollte Bahn (3) aus Lebensmittelteig.

10. Lebensmittelprodukt nach Anspruch 9, **dadurch gekennzeichnet, dass** das Stäbchen (10) eine Länge (L) zwischen 85 und 90 mm, eine Breite (I) zwischen 10 und 15 mm und eine Höhe (H) zwischen 15 und 20 mm aufweist.

11. Lebensmittelprodukt nach Anspruch 9 oder 10, **dadurch gekennzeichnet, dass** das Stäbchen (10) ein Surimistäbchen ist.

12. Produktionslinie für Lebensmittelprodukte in der Form von Stäbchen (10), **dadurch gekennzeichnet, dass** sie umfasst:
- Mittel zum Erhalten von mindestens drei Bahnen (1, 2, 3) eines Lebensmittelteigs,
- Mittel zum Einstechen von zwei der genannten Bahnen (1, 2, 3) aus Lebensmittelteig,
- Mittel zum Einrollen einer ersten eingestochenen Bahn (1) aus Lebensmittelteig in sich selbst in der Richtung ihrer Breite, dann einer zweiten eingestochenen Bahn (2) aus Lebensmittelteig um die erste in sich selbst eingerollte Bahn (1) aus Lebensmittelteig, dann der dritten, eine Hülle bildenden, nicht eingestochenen Bahn (3) aus Lebensmittelteig um die genannten eingerollten Bahnen (1, 2) aus Lebensmittelteig, um eine Rolle zu bilden,
- Mittel zum Schneiden der Rolle, um Stäbchen (10) zu bilden.

13. Produktionslinie nach Anspruch 12, **dadurch gekennzeichnet, dass** sie umfasst:
- Mittel zum Erhalten (S1, S2, S3) von drei Bahnen (1, 2, 3) aus Lebensmittelteig,
- Mittel zum Einstechen (S4) der ersten Bahn (1) aus Lebensmittelteig und der zweiten Bahn (2) aus Lebensmittelteig,
- Mittel zum Einrollen (S5) der ersten eingestochenen Bahn (1) aus Lebensmittelteig in sich selbst in der Richtung ihrer Breite, der genannten zweiten eingestochenen Bahn (2) aus Lebensmittelteig um die erste in sich selbst eingerollte Bahn (1) aus Lebensmittelteig, und Einrollen (S8) der dritten, eine Hülle bildendenden, nicht eingestochenen Bahn (3) aus Lebensmittelteig um die beiden eingerollten Bahnen (1, 2) aus Lebensmittelteig, um eine Rolle zu bilden,
- Mittel zum Schneiden (S11) der Rolle, um Stäbchen (10) zu bilden.

14. Produktionslinie nach Anspruch 12 oder 13, **dadurch gekennzeichnet, dass** sie Mittel zum teilweisen Abplatten der Rolle umfasst, die vor den Mitteln zum Schneiden angeordnet sind.

15. Produktionslinie nach einem der Ansprüche 12 bis 14, **dadurch gekennzeichnet, dass** sie Mittel zum Färben der gesamten oder eines Teils der Außenfläche der die Hülle bildenden Bahn (3) umfasst, die vor den Mitteln zum Einrollen derselben angeordnet sind.

## Claims

1. Method for manufacturing a food product in the form of a rod (10), said method comprising the following steps:
- obtaining (S1, S2, S3) at least three strips (1, 2, 3) of food dough,
- scarification (S4) of the first strip (1) of food dough and the second strip (2) of food dough,
- winding (S5) of said first strip (1) of scarified food dough on itself in the direction of its width,
- winding (S6) of said second strip (2) of scarified food dough around the first strip (1) of food dough wound on itself,
- winding (S8) of the third strip (3) of unscarified food dough, forming an envelope, around the two strips (1, 2) wound to form a roll,
- cutting (S11) of the roll to form rods (10).

2. Manufacturing method according to claim 1, **characterised in that** said at least three strips (1, 2, 3) are obtained; from a premix, or surimi dough.

3. Method according to claim 1 or 2, **characterised in that** it comprises, prior to the step of cutting (S11) the roll, a step of partial flattening (S9) of the roll.

4. Method according to any one of claims 1 to 3, **characterised in that** it comprises, prior to the winding (S8) of the strip (3) forming an envelope, the colouring (S7) of all or part of the outer surface of the latter.

5. Method according to any one of claims 1 to 4, **characterised in that** the thickness and width of the unscarified strip (3) forming an envelope are less than those of each of said at least two other strips (1, 2) of scarified food dough.

6. Method according to any one of claims 1 to 5, **characterised in that** it comprises a cooling step (S10) after flattening (S9) and before cutting (S11) the roll.

7. Method according to any one of claims 1 to 6, **characterised in that** the cutting (S11) of the roll is carried out at an angle to the longitudinal direction of said roll.

8. Method according to any one of claims 1 to 7, **characterised in that** the scarification (S4) over the width of the at least two scarified strips (1, 2) of food dough is interrupted at regular intervals when the at least two strips (1, 2) of food dough are fed through.

9. Food dough-based food product in the form of a rod (10) obtained by the method according to any of the foregoing claims, comprising :
- a first strip (1) of scarified food dough rolled up on itself in the direction of its width;
- a second strip (2) of scarified food dough wound around the first strip (1) of food dough wound on itself, and
- a third strip (3) of unscarified food dough, forming an envelope, wound around the second strip (2) of food dough itself wound around the first strip (1) of food dough.

10. Food product according to claim 9, **characterised in that** the rod (10) has a length (L) of between 85 and 90 mm, a width (I) of between 10 and 15 mm and a height (H) of between 15 and 20 mm.

11. Food product according to claim 9 or 10, **characterised in that** the rod (10) is a surimi rod.

12. Production line for food products in the form of rods (10), **characterised in that** it comprises :
- means for obtaining at least three strips (1, 2, 3) of food dough,
- means for scarification of two of said strips (1, 2, 3) of food dough,
- means for winding a first strip (1) of scarified food dough on itself in the direction of its width, then a second strip (2) of scarified food dough around the first strip (1) of food dough wound on itself, then the third strip (3) of unscarified food dough, forming an envelope, around said strips (1, 2) of food dough wound so as to form a roll,
- means for cutting the roll to form rods

13. Production line according to claim 12, **characterised in that** it comprises :
- means for obtaining (S1, S2, S3) three strips (1, 2, 3) of food dough,
- means for scarification (S4) of the first strip (1) of food dough and the second strip (2) of food dough,
- means (S5) for winding (S5) the first strip (1) of scarified food dough on itself in the direction of its width, said second strip (2) of scarified food dough around the first strip (1) of food dough wound on itself, and for winding (S8) the third strip (3) of unscarified food dough, forming an envelope, around the two strips (1, 2) of food dough wound so as to form a roll,
- means for cutting (S11) the roll to form rods (10).

14. Production line according to claim 12 or 13, **characterised in that** it comprises means for partially flattening the roll, arranged before the cutting means.

15. Production line according to any one of claims 12 to 14, **characterised in that** it comprises means for colouring all or part of the outer surface of the strip (3) forming an envelope arranged before the means for winding it.
